# EUROPEAN PATENT SPECIFICATION

(11) **EP 1 300 371 B1**
(45) Date of publication and mention of the grant of the patent: **17.01.2007**
(21) Application number: 02021811.1
(22) Date of filing: 27.09.2002
(51) Int. Cl.: C03B 37/018

(54) **Method and device for manufacturing an optical fibre preform by the modified chemical vapour deposition process**
Verfahren und Vorrichtung zum Herstellen einer Vorform für optische Fasern mittels des Verfahrens genannt modifizierte chemische Abscheidung aus der Dampfphase
Procédé et appareil pour fabriquer une préforme pour fibres optiques par le procédé de dépôt chimique modifié en phase vapeur

(30) Priority: 03.10.2001 US 968848
(43) Date of publication of application: 09.04.2003
(73) Proprietor: Draka Comteq B.V., 1018 TX Amsterdam (NL)
(72) Inventor: Shay, Chris, Hickory, North Carolina 28601 (US)
(74) Representative: Dohmen, Johannes Maria Gerardus

(56) References cited:
- US-A- 4 389 229
- US-A- 4 813 989
- US-A- 5 972 115
- PATENT ABSTRACTS OF JAPAN vol. 009, no. 293 (C-315), 20 November 1985 (1985-11-20) & JP 60 137840 A (FURUKAWA DENKI KOGYO KK), 22 July 1985 (1985-07-22)
- PATENT ABSTRACTS OF JAPAN vol. 005, no. 106 (C-062), 10 July 1981 (1981-07-10) & JP 56 045845 A (NIPPON TELEGR & TELEPH CORP ;OTHERS: 01), 25 April 1981 (1981-04-25)
- PATENT ABSTRACTS OF JAPAN vol. 009, no. 278 (C-312), 6 November 1985 (1985-11-06) & JP 60 122738 A (FURUKAWA DENKI KOGYO KK), 1 July 1985 (1985-07-01)
- PATENT ABSTRACTS OF JAPAN vol. 007, no. 122 (C-168), 26 May 1983 (1983-05-26) -& JP 58 041734 A (SHOWA DENSEN DENRAN KK), 11 March 1983 (1983-03-11)
- PATENT ABSTRACTS OF JAPAN vol. 009, no. 082 (C-275), 11 April 1985 (1985-04-11) & JP 59 217633 A (FURUKAWA DENKI KOGYO KK), 7 December 1984 (1984-12-07)

## Description

### BACKGROUND OF THE INVENTION

### Field of the Invention

The present invention relates to fabrication of an optical fiber preform. More specifically, the present invention relates to removing soot particles and controlling the diameter of the preform during a chemical vapor deposition (CVD) process.

### Description of the Related Art

U.S. patent 4,389,229 discloses that more than 50% of the reactants do not deposit on the inner surface of the preform tube, but pass therethrough and along a collection tube, which is fused to the end of the preform tube, and pass through a conduit to a scrubber. A substantially portion of the undeposited reactants will accumulate within the collection tube. The apparatus is comprised of a double wall exhaust tube, a reactant collection chamber and a pressure control apparatus comprising an input from a pressure sensor mounted within the discharge housing and an output lead connected to the motor which motor activates the cone to change the cross sectional area of the opening. The discharge housing communicates with the reactant collection chamber via a flexible tube. Since more than 50% of the reactants do not deposit on the inner surface of the preform tube, but pass therethrough and along a collection tube, there is a serious risk that undeposited soot will contact the pressure sensor mounted within the discharge housing.

The present invention is useable with a process for manufacturing a preform from which optical fibers may be drawn. Such optical fibers are used for transmitting optical signals in telecommunications applications. The preform may be manufactured by a variety of methods, including the CVD process in which glassy particles (soot) are deposited onto the inside wall of a glass substrate tube. The soot generally comprises silica that has been doped to provide a desired index of refraction. During the deposition process the soot is passed longitudinally through the glass tube by a carrier gas and a heat source is passed over the outside of the glass tube. The heat from the heat source sinters the soot to provide a homogenous glass layer. Heating the tube softens the tube and the pressure must be controlled inside the tube to achieve a desired tube diameter. Without a constant target pressure, the tube diameter may detrimentally increase, decrease, or otherwise deform, thereby affecting the quality of the preform and the resulting fibers drawn from the preform.

Methods for controlling the pressure inside the tube are currently unsatisfactory. For example, known methods of controlling the pressure inside the tube include using a valve to control the flow of the soot and carrier gas, and introducing a counterflow of a gas, such as oxygen, nitrogen, or other inert gas, at a downstream position relative to the flow of soot. In either example, a back-pressure is thereby created in the tube. However, such prior art methods suffer from several drawbacks including, for example, "blow-back" caused by the valve sticking in a "closed" position, or imbalances that develop between the tube inlet and exit pressures. Specifically, the valve may become clogged with soot and is prevented from opening properly, some other obstruction within the apparatus may develop, or the counterflow gas may "spike" due to an unintended control loop command. Regardless of the cause, the pressure imbalance must eventually correct itself, often to the detriment of the preform. Short-term imbalances such as those described above can result in large soot agglomerations being propelled backwards into the substrate tube. These instances of blow-back cause imperfections, such as bubbles, that reduce the quality of the preform. Long-term pressure imbalances can cause catastrophic failures if the over-pressurization persists for a sufficient amount of time to cause the preform to burst.

In view of the preceding discussion, a need exists for an apparatus and method for controlling the pressure in the glass substrate tube without causing imperfections or preform bursting during a CVD process.

### ASPECTS OF THE INVENTION

In a first aspect of the present invention an optical fiber preform fabricating device is provided comprising a particle remover for removing soot from a carrier gas, the soot being particles that are not deposited on the inner surface of a substrate tube, a soot collector communicating with said particle remover for containing the soot removed by said particle remover, a control valve communicating with said particle remover, said control valve for adjusting the pressure within the substrate tube, a pressure transducer for monitoring the pressure of the carrier gas, a controller for controlling said control valve in accordance with the pressure monitored by said pressure transducer, and a removing device communicating with said control valve, said removing device for removing components from the carrier gas, wherein said pressure transducer is located between said particle removing device and said control valve.

In another aspect of the present invention, a method for fabricating a preform is provided comprising the steps of removing soot from a carrier gas before the carrier gas passes through a valve, the soot being particles that are not deposited onto the inner surface of a substrate tube, controlling the pressure and the flow rate of the carrier gas within the substrate tube, monitoring the pressure of the carrier gas during removal of the soot, and controlling the flow rate of the carrier gas in accordance with the pressure monitored in said monitoring step, wherein the pressure of said carrier gas is detected at a position downstream from the position where soot is removed from said carrier gas, the pressure thus detected is applied to increase or decrease the flow rate of said carrier gas through said substrate tube, wherein the difference in pressure between said carrier gas in the substrate tube and ambient pressure outside the substrate tube causes the substrate tube to expand or collapse to reach a desired diameter.

These and other aspects, features and advantages of the present invention will become apparent from the following detailed description of the preferred embodiments taken in conjunction with the accompanying drawings.

### BRIEF DESCRIPTION OF THE DRAWINGS

Figure 1 is a plan view of a preferred embodiment of the present invention.
Figure 2 is a plan view of features of the preferred embodiment of the present invention.
Figure 3 is a cross-sectional view of a glass tube during a CVD operation.

### DETAILED DESCRIPTION OF THE INVENTION

As explained below in detail, preferred embodiments of the present invention provide an apparatus and method for removing soot particles from a carrier gas and for controlling the diameter of a glass substrate tube during a CVD process. Of course the invention should not be limited solely to such features. These and other features of the preferred embodiments of the present invention are discussed below in detail.

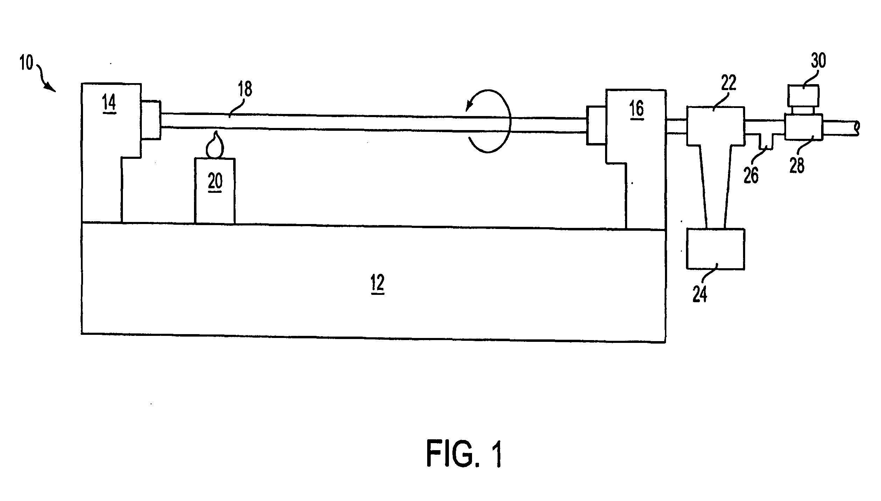

A deposition apparatus 10 for performing a CVD operation in accordance with the present invention is illustrated in Figure 1. The deposition apparatus 10 includes a glass working lathe 12 having a headstock 14 and a tailstock 16. The headstock 14 and tailstock 16 support a substrate tube 18 in such a manner that the substrate tube 18 may be rotated about its longitudinal axis. The substrate tube 18 is mounted in the headstock 14 and tailstock 16 such that a stream of reactants, collectively referred to as soot, entrained in a carrier gas passes longitudinally through the substrate tube 18. Specifically, the reactants and the carrier gas are fed through the headstock 14, they react and form soot particles in the substrate tube 18, and the effluent, which includes carrier gasses and undeposited soot, flows through the tail stock 16. The soot includes dopants, such as germanium, for affecting optical properties of the finished preform. In a preferred embodiment the soot may also include phosphorous, fluorine, or any other desired materials.

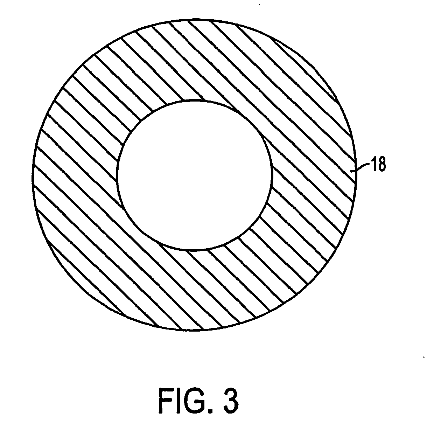

The glass working lathe 12 also includes a heat source 20 such as a hydrogen and oxygen burner that directs heat against the substrate tube 18 in a defined heated area. The heated area creates a reaction zone within the substrate tube 18. The heat source 20 is moved co-axially along the rotating substrate tube 18 during the CVD process, thereby causing the reaction zone to move along the substrate tube 18. Soot is deposited onto the inner surface of the substrate tube 18 within and downstream of the reaction zone and is fused into a homogenous layer by the heat from the heat source 20. Moving the heat source 20 along the substrate tube 18 is repeated one or more times to deposit additional layers of soot onto the inner wall of the substrate tube 18. The wall of the substrate tube 18 is thereby increased to a desired thickness. See Figure 3.

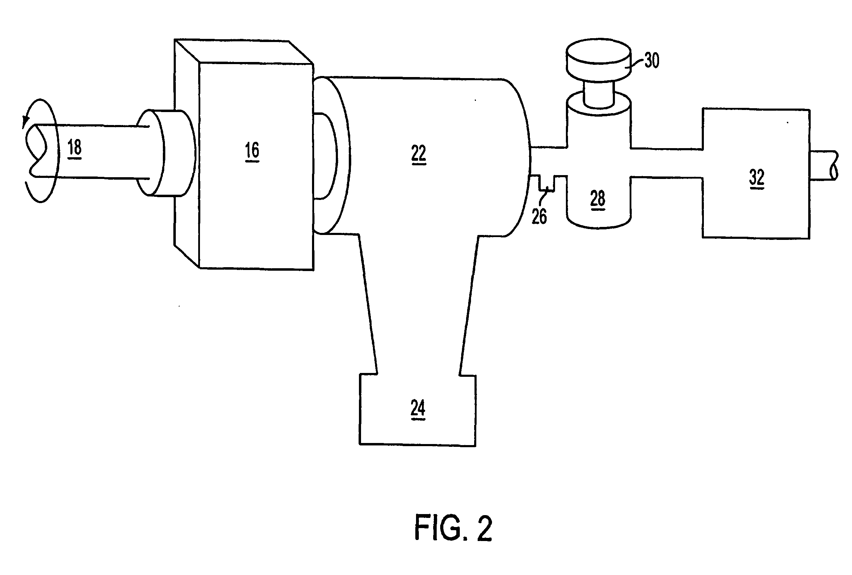

Not all of the soot is deposited onto the wall of the substrate tube 18 when the soot and carrier gas mixture passes through the reaction zone. The remaining soot and carrier gas mixture exits the substrate tube 18 through the tailstock 16. As shown in Figures 1 and 2, the soot and gas mixture passes through the tailstock 16 and enters a particle removing device 22 for removing the soot particles from the gas stream. Soot particles are thereby prevented from passing back into the substrate tube 18 if there is any inadvertent counterflow of the carrier gas. The particle removing device 22 may be any suitable mechanism for removing the soot particles. Examples of such a device include separators such as a cyclone, impaction box, impingement separator, filter, scrubber, thermal separator or a settling chamber. In a preferred embodiment, a soot collector 24 communicates with the particle removing device 22 and collects the soot particles for later disposal or recycling. The soot collector 24 may be configured as a removable drawer, a bag or box, or any other easily replaceable or easily cleanable structure. Of course the invention is not limited to the above-described structures, and other devices for separating and holding the soot particles are also considered to be within the scope of the present invention.

In the preferred embodiment, the gas stream exits the particle removing device 22 then passes across a pressure transducer 26. The pressure transducer 26 may be any known pressure transducer. The pressure transducer 26 detects the pressure of the carrier gas as it exits the particle removing device 22 and, from this detected pressure, the pressure inside the substrate tube 18 may be closely approximated. The position shown in Figures 1 and 2 for pressure transducer 26 is only one example. Other ports for pressure measurement can be placed at various points within the system. Also, for increased accuracy, multiple pressure transducers 26 may be used to detect the pressure at multiple points within the deposition apparatus 10. For example, a pressure transducer 26 may be incorporated into one or more of the particle removing device 22, the tailstock 16 and the headstock 14. The pressure within the substrate tube 18 may thus be accurately approximated in accordance with measurements from one or more of the pressure transducers 26.

As shown in Figure 2, the carrier gas passes through a control valve 28 after passing across the pressure transducer 26. The control valve 28 controls the flow rate of the gas stream as the gas stream passes through the deposition apparatus 10 and thereby controls the gas pressure inside the substrate tube 18. Specifically, the control valve 28 is adjusted by a controller 30 to regulate the flow rate of the gas in accordance with the pressure detected by the pressure transducer 26. By way of example, the controller 30 may include a central processing unit and memory with executable code for manipulating data received from the pressure transducer 26 and for outputting a corresponding control signal to the control valve 28. The control valve 28 may be any conventional pressure proportioning or flow control valve assembly, or any other variable aperture device useable for regulating the flow of gas and/or pressure in response to a control signal or other input. The controller 30 controls the control valve 28 such that the pressure of the carrier gas inside substrate tube 18 reaches and maintains a desired value. The pressure of the carrier gas in the substrate tube 18 is decreased by controlling the control valve 28 to adjust to a more open position. The flow rate of the carrier gas through the control valve 28 and out of the substrate tube 18 is thereby increased, and the pressure within the substrate tube 18 is decreased. Alternatively, the pressure of the carrier gas in the substrate tube 18 is increased by controlling the control valve 28 to adjust to a more closed position. The flow rate of the carrier gas through the control valve 28 and out of the substrate tube 18 is thereby decreased, and the pressure within the substrate tube 18 increases. In accordance with a preferred embodiment of the present invention, the control valve 28 does not suffer performance degradation caused by soot accretion. Instead, the particle removing device 22 removes the soot from the carrier gas before the carrier gas enters the control valve 28, and the control valve 28 is thus protected from becoming clogged or fouled. Blow-back of gas into the substrate tube 18 resulting from the control valve 28 sticking in the closed position, leading to an imbalance in gas pressures, is thereby prevented. If more than one pressure transducer 26 is used to monitor pressures within the deposition apparatus 10, the controller 30 adjusts the control valve 28 in accordance with the pressures detected by each of the pressure transducers 26, or by pre-determined combinations of the pressure transducers 26.

The gas stream exits the control valve 28 and passes to downstream components such as a scrubber 32 for further removing components from the carrier gas. For example, the scrubber 32 removes any remaining particles, chlorine gases, germanium, silica, byproducts of reactions in the reaction zone, or any other predetermined components of the carrier gas.

As described above in detail, a preferred embodiment of the present invention prevents fouling of the control valve 28, and prevents blow-back of the carrier gas and soot into the substrate tube 18. In addition to preventing fouling and blow-back, a preferred embodiment of the present invention also controls the diameter of the substrate tube 18. Specifically, the wall of the substrate tube 18 in the reaction zone is softened when the wall is heated by the heat source 20. The pressure of the carrier gas is detected by one or more of the pressure transducers 26 and the pressure within the reaction zone of the substrate tube 18 is approximated. The controller 30 then controls the control valve 28 to increase or decrease the flow rate of the carrier gas through the substrate tube 18 in accordance with the pressure detected by the pressure transducer. The difference in pressure between the carrier gas in the substrate tube 18 and ambient pressure outside the substrate tube 18 causes the softened walls of the substrate tube 18 to expand or collapse to reach a desired diameter. Further, unwanted and potentially dangerous expansion of the substrate tube 18 resulting from obstructions caused by soot build-up in the exhaust apparatus is prevented in the manner previously discussed. Specifically, the control valve 28 is prevented from becoming fouled, and an unwanted pressure differential does not occur, because the particle removing device 22 removes unwanted soot particles from the carrier gas stream before the carrier gas stream passes through the control valve 28. In the foregoing manner the diameter of the substrate tube 18 in the reaction zone is reliably controlled. As the heat source 20 moves along the substrate tube 18 the reaction zone also moves along the substrate tube 18. The diameter of the entire substrate tube 18 is then controlled in the foregoing manner.

Although specific embodiments of the present invention have been described above in detail, it will be understood that this description is merely for illustration purposes. Various modifications of and equivalent structures corresponding to the disclosed aspects of the preferred embodiments in addition to those described above may be made by those skilled in the art without departing from the scope of the following claims.

## Claims

1. An optical fiber preform fabricating device (10), comprising:
a particle remover (22) for removing soot from a carrier gas, the soot being particles that are not deposited onto the inner surface of a substrate tube (18),
a soot collector (24) communicating with said particle remover (22) for containing the soot removed by said particle remover (22),
a control valve (28) communicating with said particle remover (22), said control valve (28) for adjusting the pressure within the substrate tube (18),
a pressure transducer (26) for monitoring the pressure of the carrier gas,
a controller (30) for controlling said control valve (28) in accordance with the pressure monitored by said pressure transducer (26), and
a removing device (32) communicating with said control valve (28), said removing device (32) for removing components from the carrier gas **characterized in that** said pressure transducer (26) is located between said particle removing device (22) and said control valve (28).

2. The optical fiber preform fabricating device recited in claim 1, further comprising a headstock (14) and a tailstock (16) communicating with said particle remover (22) and said substrate tube (18), said headstock (14) and said tailstock(16) cooperating to rotate the substrate tube (18) about the substrate tube's longitudinal axis.

3. The optical fiber preform fabricating device recited in claim 2, further comprising a heater (20) for heating the substrate tube (18) as said headstock (14) and said tailstock (16) rotate the substrate tube (18).

4. A method for fabricating a preform, comprising the steps of:
removing soot from a carrier gas before the carrier gas passes through a valve (28), the soot being particles that are not deposited onto the inner surface of a substrate tube (18),
controlling the pressure and the flow rate of the carrier gas within the substrate tube (18), monitoring the pressure of the carrier gas during removal of the soot, and
controlling the flow rate of the carrier gas in accordance with the pressure monitored in said monitoring step,
**characterized in that** the pressure of said carrier gas is detected at a position downstream from the position where soot is removed from said carrier gas, the pressure thus detected is applied to increase or decrease the flow rate of said carrier gas through said substrate tube, wherein the difference in pressure between said carrier gas in the substrate tube and ambient pressure outside the substrate tube causes the substrate tube to expand or collapse to reach a desired diameter.

5. The method of fabricating a preform recited in claim 4, further comprising the step of heating the substrate tube to fuse soot onto the substrate tube.

6. The method for fabricating a preform recited in claim 4, further comprising the step of removing components of the gas stream after said removing step.

## Patentansprüche

1. Herstellungsvorrichtung (10) für eine Vorform einer optischen Faser, umfassend:
ein Partikelentfernungsmittel (22), um Ruß aus einem Trägergas zu entfernen, wobei der Ruß aus Partikeln besteht, welche sich nicht auf die innere Oberfläche eines Substratrohrs (18) absetzen,
einen Rußsammler (24), welcher mit dem Partikelentfernungsmittel (22) verbunden ist, um den Ruß, welcher von dem Partikelentfernungsmittel (22) entfernt wird, aufzunehmen,
ein Steuerventil (28), welches mit dem Partikelentfernungsmittel (22) verbunden ist, wobei das Steuerventil (28) den Druck in dem Substratrohr (18) einstellt,
einen Druckmessumformer (26), um den Druck des Trägergases zu überwachen,
eine Steuerung (30), um das Steuerventil (28) gemäß des Drucks, welcher durch den Druckmessumformer (26) überwacht wird, zu steuern, und
eine Entfernungsvorrichtung (32), welche mit dem Steuerventil (28) verbunden ist, wobei die Entfernungsvorrichtung (32) vorhanden ist, um Komponenten aus dem Trägergas zu entfernen, **dadurch gekennzeichnet, dass** sich der Druckmessumformer (26) zwischen dem Partikelentfernungsmittel (22) und dem Steuerventil (28) befindet.

2. Herstellungsvorrichtung für eine Vorform einer optischen Faser nach Anspruch 1, weiter ein vorderes Handlager (14) und ein hinteres Handlager (16) umfassend, welche mit dem Partikelentfernungsmittel (22) und dem Substratrohr (18) verbunden sind, wobei das vordere Handlager (14) und das hintere Handlanger (16) zusammenwirken, um das Substratrohr (18) um die Längsachse des Substratsrohres zu drehen.

3. Herstellungsvorrichtung für eine Vorform einer optischen Faser nach Anspruch 2, weiter eine Heizvorrichtung (20) umfassend, um das Substratrohr (18) zu heizen, wenn das vordere Handlager (14) und das hintere Handlager (16) das Substratrohr (18) drehen.

4. Verfahren zur Herstellung einer Vorform, die Schritte umfassend:
Entfernen von Ruß aus einem Trägergas bevor das Trägergas durch ein Ventil (28) verläuft, wobei der Ruß aus Partikeln besteht, welche sich nicht auf der inneren Oberfläche eines Substratrohrs (18) absetzen,
Steuern des Drucks und der Strömungsrate des Trägergases in dem Substratrohr (18), Überwachen des Drucks des Trägergases während des Entfernens des Ru-ßes, und
Steuern der Strömungsrate des Trägergases gemäß dem in dem Überwachungsschritt überwachten Druck,
**dadurch gekennzeichnet, dass** der Druck des Trägergas bei einer Position stromabwärts von der Position erfasst wird, wo der Ruß aus dem Trägergas entfernt wird, wobei der somit erfasste Druck aufgebracht wird, um die Strömungsrate des Trägergases durch das Substratrohr zu erhöhen oder abzusenken, wobei der Druckunterschied zwischen dem Trägergas in dem Substratrohr und einem Umgebungsdruck außerhalb des Substratrohrs bewirkt, dass sich das Substratrohr ausdehnt oder zusammenzieht, um einen erwünschten Durchmesser zu erreichen.

5. Verfahren zur Herstellung einer Vorform nach Anspruch 4, weiter den Schritt eines Aufheizens des Substratrohrs umfassend, um Russ auf das Substratrohr zu schmelzen.

6. Verfahren zur Herstellung einer Vorform nach Anspruch 4, weiter den Schritt eines Entfernens von Komponenten des Gasstroms nach dem Entfernungsschritt umfassend.

## Revendications

1. Dispositif de fabrication de préformes pour fibres optiques (10), comprenant :
un éliminateur de particules (22) pour éliminer la suie d'un gaz porteur, la suie étant constituée de particules qui ne se déposent pas sur la surface interne d'un tube de substrat (18),
un collecteur de suie (24) communiquant avec ledit éliminateur de particules (22) afin qu'il contienne la suie éliminée par ledit éliminateur de particules (22),
une soupape de régulation (28) communiquant avec ledit éliminateur de particules (22), ladite soupape de régulation (28) servant à ajuster la pression dans le tube de substrat (18),
un transducteur de pression (26) pour mesurer la pression du gaz porteur,
une unité de commande (30) pour commander ladite soupape de régulation (28) en conformité avec la pression mesurée par ledit transducteur de pression (26), et
un dispositif d'élimination (32) communiquant avec ladite soupape de régulation (28), ledit dispositif d'élimination (32) servant à éliminer des composants du gaz porteur, **caractérisé en ce que** ledit transducteur de pression (26) est situé entre ledit dispositif d'élimination de particules (22) et ladite soupape de régulation (28).

2. Dispositif de fabrication de préformes pour fibres optiques selon la revendication 1, comprenant en outre une poupée (14) et une contre-poupée (16) communiquant avec ledit éliminateur de particules (22) et ledit tube de substrat (18), ladite poupée (14) et ladite contre-poupée (16) coopérant pour faire tourner le tube de substrat (18) autour de l'axe longitudinal du tube de substrat.

3. Dispositif de fabrication de préformes pour fibres optiques selon la revendication 2, comprenant en outre un élément chauffant (20) pour chauffer le tube de substrat (18) lorsque ladite poupée (18) et ladite contre-poupée (16) font tourner le tube de substrat (18).

4. Procédé de fabrication d'une préforme, comprenant les étapes consistant à :
éliminer de la suie d'un gaz porteur avant que le gaz porteur passe à travers une soupape (28), la suie étant constituée de particules qui ne se déposent pas sur la surface interne d'un tube de substrat (18),
réguler la pression et le débit du gaz porteur à l'intérieur du tube de substrat (18), mesurer la pression du gaz porteur pendant l'élimination de la suie, et
réguler le débit du gaz porteur en fonction de la pression mesurée lors de ladite étape de mesure,
**caractérisé en ce que** la pression dudit gaz porteur est détectée à une position en aval de la position à laquelle de la suie est éliminée dudit gaz porteur, la pression ainsi détectée étant appliquée de façon à augmenter ou réduire le débit dudit gaz porteur à travers ledit tube de substrat, dans lequel la différence de pression entre ledit gaz porteur dans le tube de substrat et la pression ambiante à l'extérieur du tube de substrat a pour effet que le tube de substrat se dilate ou se contracte pour atteindre un diamètre souhaité.

5. Procédé de fabrication d'une préforme selon la revendication 4, comprenant en outre l'étape consistant à chauffer le tube de substrat pour faire fondre la suie sur le tube de substrat.

6. Procédé de fabrication d'une préforme selon la revendication 4, comprenant en outre l'étape consistant à éliminer des composants du flux gazeux après ladite étape d'élimination.
